# EUROPÄISCHE PATENTSCHRIFT

(11) **EP 1 852 307 B1**
(45) Veröffentlichungstag und Bekanntmachung des Hinweises auf die Patenterteilung: **21.03.2012**
(21) Anmeldenummer: 07104832.6
(22) Anmeldetag: 23.03.2007
(51) Int. Cl.: G06K 9/00, B60R 1/00, G06K 9/46, G06T 7/00, G06T 7/20

(54) **Einrichtung und Verfahren zur Überwachung des toten Winkels bei Fahrzeugen**
Device and method for controlling the blind spot of vehicles
Dispositif et procédé de surveillance de l'angle mort dans des véhicules

(30) Priorität: 05.05.2006 DE 102006020888
(43) Veröffentlichungstag der Anmeldung: 07.11.2007
(73) Patentinhaber: ROBERT BOSCH GMBH, 70442 Stuttgart (DE)
(72) Erfinder: Loewe, Andreas, 31246 Lahstedt (DE); Niehsen, Wolfgang, 31162 Bad Salzdetfurth (DE); Schick, Jens, 71083 Herrenberg (DE); Wingbermuehle, Jochen, 30966 Hemmingen (DE)

(56) Entgegenhaltungen:
- EP-A2- 1 271 179
- EP-A2- 1 562 146
- US-A1- 2003 108 221
- US-A1- 2005 125 121

## Beschreibung

### Stand der Technik

Die Erfindung betrifft eine Einrichtung zur Überwachung des toten Winkels bei Fahrzeugen mit mindestens einer Videokamera, welche die Verkehrssituation im toten Winkel aufnimmt, und mit mindestens einer Auswerteeinrichtung, welche aus von der mindestens einen Videokamera erzeugten Videosignalen bei Erkennen eines Fremdobjektes ein Warnsignal ableitet und an eine Signaleinrichtung abgibt.

Im seitlich rückwärtigen Umfeld von Fahrzeugen existieren in der Regel Raumbereiche, die mit den herkömmlichen Außenspiegeln nicht oder nur schlecht beobachtet werden können, sogenannte tote Winkel oder Blind Spots. Insbesondere beim Spurwechseln besteht eine erhöhte Kollisionsgefahr mit anderen Fahrzeugen, die sich innerhalb des toten Winkels befinden oder sich in diesen hineinbewegen.

Mit dem Begriff "Blind Spot Detection" werden Systeme zur automatischen Überwachung des toten Winkels bezeichnet. Wird innerhalb eines toten Winkels ein anderer Verkehrsteilnehmer erkannt, so warnen diese Systeme den Fahrer insbesondere dann, wenn dieser erkennbar einen Spurwechsel beabsichtigt. Um die Absicht eines Spurwechsels zu erkennen, kann ein Lenkwinkelsensor abgefragt werden. Es ist ferner dazu auch die Abfrage eines Fahrtrichtungsanzeigers bekannt geworden.

Eine solche Einrichtung ist beispielsweise aus DE 42 28 794 A1 bekannt geworden, bei welcher mindestens eine Videokamera auf den toten Winkel gerichtet ist und mindestens eine Auswerteeinrichtung ein Signal ableitet, das im Falle der Betätigung des Fahrtrichtungsanzeigers den Fahrer warnt. Anstelle von einer oder mehrerer Videokameras können auch temperaturempfindliche Sensoren oder Ultraschalldetektoren verwendet werden.

Die EP 1562146 A2 ist als nächstliegender Stand der Technik zu sehen und zeigt eine in der Nähe des Rückspiegels angeordnete den rückwärtigen Raum erfassende Kamera, die auch den Toten Winkel erfasst, und mittels einer zeilenweisen Analyse des Digitalbildes Bewegungen von Objekten erkennt, und gegebenenfalls eine Warnung für den Fahrer auslösen kann.

Die US 2003/108221 A1 lehrt eine Auswerteeinrichtung zur Kantendetektion, die einen Analogteil zur analogen Signalverarbeitung aufweist und zur zeilenweisen Extraktion von Bildinhalten aus den Videosignalen ausgebildet ist.

### Offenbarung der Erfindung

Technische Aufgabe

Als Auswerteeinrichtungen werden im Allgemeinen Prozessoren angewandt, wobei die Erzeugung oder Verarbeitung vollständig digitalisierter Bilder hohe Anforderungen an Rechenleistung und Speicherkapazität der eingesetzten digitalen Signalverarbeitungskomponenten stellt. Aufgabe der Erfindung ist es, einen derartigen Aufwand zu verringern.

### Technische Lösung

Diese Aufgabe wird erfindungsgemäß dadurch gelöst, dass die Auswerteeinrichtung einen Analogteil zur analogen Signalverarbeitung und einen Digitalteil zur digitalen Signalverarbeitung aufweist, dass der Analogteil zur zeilenweisen Extraktion von Bildinhalten aus den Videosignalen ausgebildet ist und dass der Digitalteil durch Vergleich mit einem zugeführten die Eigenbewegung des Fahrzeugs kennzeichnenden Signal die extrahierten Bildinhalte, die nicht sich fortbewegende Objekte darstellen, von der Bildung des Warnsignals ausnimmt.

Die Eigenbewegung kann im Wesentlichen die Geschwindigkeit des Fahrzeugs sein, die mit geeigneten Sensoren, beispielsweise Tachometer oder Drehzahlsensoren am Motor oder Getriebe, ermittelt wird. Eine genauere Vorhersage der Objektbewegung im Bild kann unter Umständen mit zusätzlichen Informationen zur Eigenbewegung des Fahrzeugs durchgeführt werden. Diese können beispielsweise Fahrzeugbeschleunigungen sein, etwa in Form der Gier-, Nick- und Rollrate. Solche Informationen sind bei vielen modernen Fahrzeugen am Fahrzeugdatenbus abrufbar, wo sie beispielsweise vom elektronischen Stabilitätsprogramm eingespeist werden.

### Vorteilhafte Wirkungen

Der Erfindung liegt die Erkenntnis zugrunde, dass zur Überwachung des toten Winkels bezüglich anderer Verkehrsteilnehmer ein grobes Raster von Bildpunkten in dem relevanten Bildbereich ausreicht. Die relevante und damit tatsächlich zu verarbeitende Information stellt also nur einen kleinen Anteil der von digitalen Systemen verarbeitenden Datenmenge dar. Der Analogteil kann von einfachen Schaltungen gebildet werden. Die verbleibenden Anforderungen hinsichtlich der Rechenleistung und Speicherkapazität sind so gering, dass auf sehr kompakte und verlustarme Komponenten zurückgegriffen werden kann.

Eine vorteilhafte Ausgestaltung der erfindungsgemäßen Einrichtung besteht darin, dass die Videosignale jeweils einem Differentiator und einem Integrator zugeführt werden, dass an den Ausgang des Differentiators ein Komparator zum Vergleich mit einem vorgegebenen Schwellwert angeschlossen ist, dass Mittel zum Rücksetzen des Integrators vorgesehen sind, wenn das Ausgangssignal des Differentiators den vorgegebenen Schwellwert überschreitet, und dass das Ausgangssignal des Integrators vor dem Rücksetzen dem Digitalteil zuführbar ist.

Eine weitere Entlastung der digitalen Komponenten ist dadurch möglich, dass Videosignale ausgewählter Zeilen ausgewertet werden. Dazu können vor dem Analogteil mittels einer Torschaltung Zeilen oder die extrahierten Bildinhalte am Eingang des Digitalteils ausgewählt werden. Die Anzahl der auszuwählenden Zeilen kann je nach den vorliegenden Voraussetzungen vom Fachmann gewählt werden. Im Allgemeinen werden etwa zehn Zeilen ausreichen.

Eine vorteilhafte Auswertung im Digitalteil kann gemäß einer Weiterbildung dadurch vorgenommen werden, dass Mittel vorgesehen sind, welche die mittleren Grauwerte, die in einem Bild erkannt werden, anhand der bekannten Eigenbewegungen des Fahrzeuges nutzen, um die korrespondierenden Grauwerte im zeitlich nachfolgenden Bild vorherzusagen. Dabei ist vorzugsweise vorgesehen, dass für die Vorhersage Look-up-Tabellen für die örtliche Transformation zwischen Bild- und Fahrbahnebene verwendet werden und dass anhand der Differenz zwischen dem vorhergesagten und dem tatsächlich beobachteten Grauwert im nachfolgenden Bild entschieden wird, ob sich ein bewegtes Objekt in dem entsprechenden Raumbereich befindet.

Das erfindungsgemäße Verfahren löst die Aufgabe dadurch, dass in einem Analogteil der Auswerteeinrichtung eine zeilenweise Extraktion von Bildinhalten aus den Videosignalen erfolgt und dass in einem Digitalteil der Auswerteeinrichtung durch Vergleich mit einem zugeführten die Eigenbewegung des Fahrzeugs kennzeichnenden Signal die extrahierten Bildinhalte, die nicht sich fortbewegende Objekte darstellen, von der Bildung des Warnsignals ausgenommen werden.

Durch die in den weiteren Unteransprüchen aufgeführten Maßnahmen sind vorteilhafte Weiterbildungen und Verbesserungen des im Verfahrensanspruch angegebenen Verfahrens möglich.

### Kurze Beschreibung der Zeichnungen

Ein Ausführungsbeispiel der Erfindung ist in der Zeichnung anhand mehrerer Figuren dargestellt und in der nachfolgenden Beschreibung näher erläutert. Es zeigt:
Fig. 1 ein Blockschaltbild des Ausführungsbeispiels,
Fig. 2 zwei von einer Videokamera aufgenommene Bilder zur Erläuterung des erfindungsgemäßen Verfahrens,
Fig. 3 ein Kraftfahrzeug auf einer Fahrbahn mit zwei Videokameras und
Fig. 4 ein Blockschaltbild eines Analogteils einer erfindungsgemäßen Einrichtung.

### Ausführungsform der Erfindung

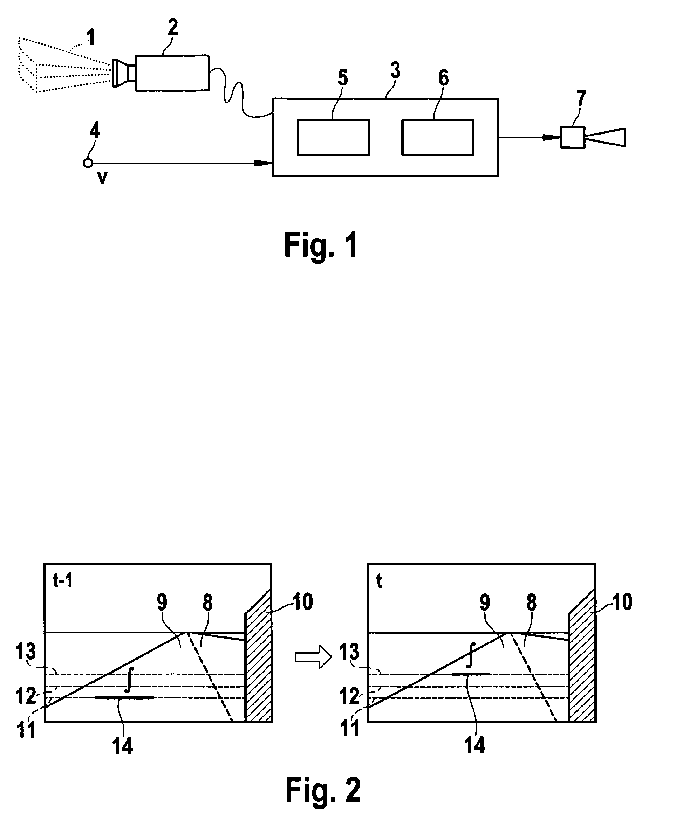

In Fig. 1 ist das Blickfeld 1 einer Videokamera 2 gestrichelt angedeutet. Ein Ausgang der Videokamera 2 ist mit einer Auswerteeinrichtung 3 verbunden, der ferner über einen Eingang 4 ein die Fahrzeugeigenbewegung kennzeichnendes Signal v von einem nicht dargestellten Tachometer zugeführt wird. Die Auswerteeinrichtung 3 weist einen Analogteil 5 und einen Digitalteil 6 auf. Dem Digitalteil 6 ist ein Warnsignal W entnehmbar, das in nicht dargestellter Weise mit einem Signal eines Lenkwinkelgebers verknüpft und einer, beispielsweise akustischen, Signaleinrichtung zugeführt wird.

Grundsätzlich ist die Analogschaltung nur dafür geeignet Objekte, die sich von ihrem Hintergrund unterscheiden, in grober Weise wahrzunehmen. Durch einfache Analogschaltungen ist beispielsweise eine Unterscheidung zwischen einem auf die Parallelfahrbahn fallenden Schatten und einem auf der Parallelfahrbahn befindlichen Fahrzeug nicht möglich.

Zur Unterscheidung zwischen stehenden Objekten - also beispielsweise einer Fahrbahnmarkierung oder dem erwähnten Schatten - erfolgt in dem Digitalteil eine Objekterkennung anhand einer Analyse/Synthese-Schleife. Hierbei werden zu einem Zeitpunkt (t-1) die mittleren Grauwerte innerhalb einzelner Abschnitte ausgewählter Zeilen im Bild, die im Analogteil durch Integration bestimmt wurden, anhand der bekannten Eigenbewegung des Fahrzeugs genutzt, um die korrespondierenden Grauwerte im zeitlich nachfolgenden Bild vorherzusagen.

Die Vorhersage kann dabei optional durch Verwendung von Look-up-Tabellen für die örtliche Transformation zwischen Bild- und Fahrbahnebene sehr effizient erfolgen. Anhand der Differenz zwischen vorhergesagtem und tatsächlich beobachteten Grauwert zum Zeitpunkt t kann entschieden werden, ob sich ein bewegtes Objekt in dem entsprechenden Raumbereich befindet.

Dieser Vorgang ist in Fig. 2 dargestellt anhand eines zum Zeitpunkt t-1 aufgenommenen Bildes und eines zum Zeitpunkt t aufgenommenen Bildes. Die Bilder zeigen eine Straße mit einer Fahrbahn 8, auf der sich das eigene Fahrzeug befindet, und einer Parallelfahrbahn 9. Jeweils am rechten Rand der Bilder befindet sich eine schraffierte Fläche 10, welche den in das Bild fallenden Teil des eigenen Fahrzeugs darstellt, das bei der Auswertung unterdrückt wird.

Der Einfachheit halber sind gestrichelt drei auszuwertende Zeilen 11, 12, 13 dargestellt. Zum Zeitpunkt t-1 wird von der Zeile 11 ein Objekt 14 erfasst, das in Form eines Mittelwertes an den Digitalteil 6 (Fig. 1) übertragen wird.

Zum Zeitpunkt t wird das Objekt 14 von der Zeile 13 erfasst. Legt das eigene Fahrzeug zwischen t-1 und t einen Weg zurück, welcher der Projektion des Abstandes zwischen den Zeilen 11 und 13 auf die Parallelfahrbahn 9 entspricht, ergibt die Vorhersage, dass das Objekt 14 auf der Zeile 13 liegen müsste. Daraus wird geschlossen, dass das Objekt 14 unbeweglich, d. h. fahrbahnfest ist. Stimmen der vorhergesagte und der bei der Aufnahme des Bildes zum Zeitpunkt t ermittelte Ort des Objektes 14 nicht überein, so handelt es sich um ein auf der Parallelfahrbahn 9 bewegendes Objekt.

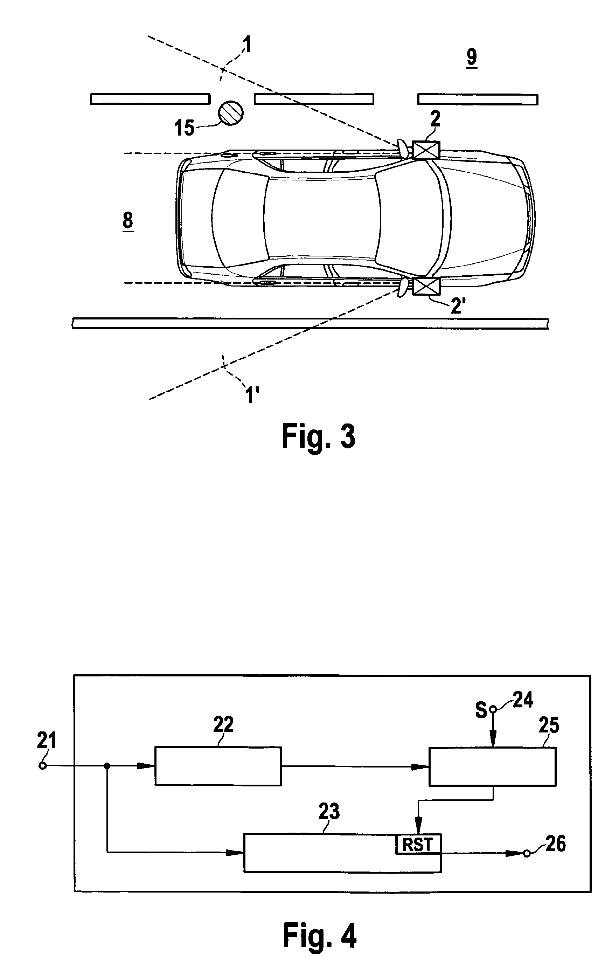

Fig. 3 zeigt beispielhaft Einbauorte einer Kamera 2 und einer Kamera 2', die vorzugsweise in die jeweiligen Rückspiegel integriert werden können. Die Erfindung ist jedoch auch mit nur einer, fahrerseitigen Kamera realisierbar. Die Blickfelder der Kamera sind mit 1 und 1' bezeichnet. Ein Objekt 15 wird von der Videokamera 2 aufgenommen. Dessen Bild wird entsprechend dem erfindungsgemäßen Verfahren ausgewertet.

Fig. 4 zeigt ein Ausführungsbeispiel für den Analogteil 5 (Fig. 1). Einem Eingang 21 wird von der Videokamera das Videosignal zugeführt. Es gelangt in einen Differentiator 22 und in einen Integrator 23. Der Differentiator dient dazu, Kanten von aufgenommenen Objekten zu separieren. Liegen die dadurch im differenzierten Videosignal vorhandenen Spitzen oberhalb eines bei 24 zugeführten Schwellwertes S, was in einem Komparator 25 festgestellt wird, wird der Integrator 23 auf seinen Anfangswert zurückgesetzt. Das zuvor sich im Integrator befindende integrierte Videosignal wird über einen Ausgang 26 dem Digitalteil zugeführt und dort wie oben beschrieben ausgewertet.

## Patentansprüche

1. Einrichtung zur Überwachung des toten Winkels bei Fahrzeugen mit mindestens einer Videokamera (2, 2'), welche die Verkehrssituation im toten Winkel aufnimmt, und mit mindestens einer Auswerteeinrichtung (3), welche aus von der mindestens einen Videokamera (2, 2') erzeugten Videosignalen bei Erkennen eines Fremdobjektes (14, 15) ein Warnsignal ableitet und an eine Signaleinrichtung (7) abgibt, wobei die Auswerteeinrichtung (3) einen Analogteil (5) zur analogen Signalverarbeitung und einen Digitalteil (6) zur digitalen Signalverarbeitung aufweist, der Analogteil (5) zur zeilenweisen Extraktion von Bildinhalten aus den Videosignalen ausgebildet ist und der Digitalteil (6) durch Vergleich mit einem zugeführten die Eigenbewegung des Fahrzeugs kennzeichnenden Signal die extrahierten Bildinhalte, die nicht sich fortbewegende Objekte darstellen, von der Bildung des Warnsignals ausnimmt,
**wobei**
die Videosignale jeweils einem Differentiator (22) und einem integrator (23) zugeführt werden, an den Ausgang des Differentiators (22) ein Komparator (25) zum Vergleich mit einem vorgegebenen Schwellwert angeschlossen ist,
Mittel zum Rücksetzen des Integrators (23) vorgesehen sind, wenn das Ausgangssignal des Differentiators (22) den vorgegebenen Schwellwert überschreitet, und das Ausgangssignal des Integrators (23) vor dem Rücksetzen dem Digitalteil (6) zuführbar ist,
oder
Mittel (6) vorgesehen sind, welche die mittleren Grauwerte, die in einem Bild erkannt werden, anhand der bekannten Eigenbewegungen des Fahrzeuges nutzen, um die korrespondierenden Grauwerte im zeitlich nachfolgenden Bild vorherzusagen.

2. Einrichtung nach Anspruch 1, **dadurch gekennzeichnet, dass** Videosignale ausgewählter Zeilen ausgewertet werden.

3. Einrichtung nach Anspruch 1 oder 2, **dadurch gekennzeichnet, dass** für die Vorhersage Look-up-Tabellen für die örtliche Transformation zwischen Bild- und Fahrbahnebene verwendet werden und dass anhand der Differenz zwischen dem vorhergesagten und dem tatsächlich beobachteten Grauwert im nachfolgenden Bild entschieden wird, ob sich ein bewegtes Objekt (14, 15) in dem entsprechenden Raumbereich befindet.

4. Verfahren zur Überwachung des toten Winkels bei Fahrzeugen mit mindestens einer Videokamera, welche die Verkehrssituation im toten Winkel aufnimmt, und mit mindestens einer Auswerteeinrichtung, welche aus von der mindestens einen Videokamera erzeugten Videosignalen bei Erkennen eines Fremdobjektes ein Warnsignal ableitet und an eine Signaleinrichtung abgibt, wobei in einem Analogteil der Auswerteeinrichtung eine zeilenweise Extraktion von Bildinhalten aus den Videosignalen erfolgt und in einem Digitalteil der Auswerteeinrichtung durch Vergleich mit einem zugeführten die Eigenbewegung des Fahrzeugs kennzeichnenden Signal die extrahierten Bildinhalte, die nicht sich fortbewegende Objekte darstellen, von der Bildung des Warnsignals ausgenommen werden,
**dadurch gekennzeichnet, dass**
die Videosignale jeweils differenziert und integriert werden, dass die differenzierten Videosignale mit einem vorgegebenen Schwellwert verglichen werden und dass die Integration abgebrochen wird, wenn das jeweils differenzierte Videosignal den vorgegebenen Schwellwert überschreitet, und dass das integrierte Videosignal dem Digitalteil zugeführt wird,
**oder**
dass die mittleren Grauwerte, die in einem Bild erkannt werden, anhand der bekannten Eigenbewegungen des Fahrzeuges nutzen, um die korrespondierenden Grauwerte im zeitlich nachfolgenden Bild vorherzusagen.

5. Verfahren nach Anspruch 4, **dadurch gekennzeichnet, dass** Videosignale ausgewählter Zeilen ausgewertet werden.

6. Verfahren nach Anspruch 4 oder 5, **dadurch gekennzeichnet, dass** für die Vorhersage Look-up-Tabellen für die örtliche Transformation zwischen Bild- und Fahrbahnebene verwendet werden und dass anhand der Differenz zwischen dem vorhergesagten und dem tatsächlich beobachteten Grauwert im nachfolgenden Bild entschieden wird, ob sich ein bewegtes Objekt in dem entsprechenden Raumbereich befindet.

## Claims

1. Device for monitoring the blind spot in vehicles having at least one video camera (2, 2') which records the traffic situation in the blind spot, and having at least one evaluation device (3) which, when a foreign object (14, 15) is detected, derives a warning signal from video signals generated by the at least one video camera (2, 2') and outputs said warning signal to a signal device (7), wherein the evaluation device (3) has an analogue part (5) for analogue signal processing and a digital part (6) for digital signal processing, the analogue part (5) is designed to perform line-by-line extraction of image contents from the video signals, and the digital part (6) removes, by comparison with a supplied signal which characterizes the vehicle's own movement, the extracted image contents, which do not represent moving objects, from the formation of the warning signal,
wherein
the video signals are each fed to a differentiator (22) and an integrator (23), a comparator (25) is connected to the output of the differentiator (22) for comparison with a predefined threshold value, means for resetting the integrator (23) are provided if the output signal of the differentiator (22) exceeds the predefined threshold value, and the output signal of the integrator (23) can be supplied to the digital part (6) before the reset,
or
means (6) are provided which use the average grey values detected in an image to predict, on the basis of the known movements of the actual vehicle, the corresponding grey values in the chronologically subsequent image.

2. Device according to Claim 1, **characterized in that** the video signals of selected lines are evaluated.

3. Device according to Claim 1 or 2, **characterized in that** look-up tables for the local transformation between the image level and the carriageway level are used for the prediction, and **in that** on the basis of the difference between the predicted grey value and the actually observed grey value in the subsequent image it is decided whether a moving object (14, 15) is in the corresponding spatial region.

4. Method for monitoring the blind spot in vehicles having at least one video camera which records the traffic situation in the blind spot, and having at least one evaluation device which, when a foreign object is detected, derives a warning signal from video signals generated by the at least one video camera and outputs said warning signal to a signal device, wherein line-by-line extraction of image contents from the video signals takes place in an analogue part of the evaluation device, and the extracted image contents which do not represent moving objects are removed from the formation of the warning signal in a digital part of the evaluation device by comparison with a supplied signal which characterizes the vehicle's own movement,
**characterized in that**
the video signals are respectively differentiated and integrated, **in that** the differentiated video signals are compared with a predefined threshold value, and **in that** the integration is aborted if the respectively differentiated video signal exceeds the predefined threshold value, and **in that** the integrated video signal is supplied to the digital part,
or
**in that** the average grey values which are detected in an image are used, on the basis of the known movements of the actual vehicle, to predict the corresponding grey values in the chronologically subsequent image.

5. Method according to Claim 4, **characterized in that** video signals of selected lines are evaluated.

6. Method according to Claim 4 or 5, **characterized in that** look-up tables for the local transformation between the image level and the carriageway level are used for the prediction, and **in that** on the basis of the difference between the predicted grey value and the actually observed grey value in the subsequent image it is decided whether a moving object is in the corresponding spatial region.

## Revendications

1. Dispositif pour surveiller l'angle mort sur des véhicules, comprenant au moins une caméra vidéo (2, 2') qui enregistre la situation de trafic dans l'angle mort, et comprenant au moins un dispositif d'interprétation (3) qui, à partir des signaux vidéo générés par l'au moins une caméra vidéo (2, 2'), dérive un signal d'alerte en cas de détection d'un objet externe (14, 15) et le délivre sur un dispositif de signalisation (7), le dispositif d'interprétation (3) présentant une partie analogique (5) pour le traitement analogique des signaux et une partie numérique (6) pour le traitement numérique des signaux, la partie analogique (5) étant configurée pour l'extraction ligne par ligne des contenus d'image à partir des signaux vidéo et la partie numérique (6), par comparaison avec un signal acheminé qui caractérise le mouvement propre du véhicule, excluant de la formation du signal d'alerte les contenus d'image extraits qui ne représentent par des objets qui se déplacent, les signaux vidéo étant à chaque fois acheminés à un circuit différenciateur (22) et à un intégrateur (23), un comparateur (25) étant raccordé à la sortie du circuit différenciateur (22) pour effectuer une comparaison avec une valeur de seuil prédéfinie, des moyens de réinitialisation de l'intégrateur (23) étant prévus lorsque la signal de sortie du circuit différenciateur (22) dépasse la valeur de seuil prédéfinie et le signal de sortie de l'intégrateur (23) pouvant être acheminé à la partie numérique (6) avant la réinitialisation
ou
des moyens (6) étant prévus, lesquels utilisent les valeurs de gris moyennes qui sont détectées dans une image au moyen des mouvements propres connus du véhicule pour prévoir les valeurs de gris correspondantes dans l'image chronologiquement suivante.

2. Dispositif selon la revendication 1, **caractérisé en ce que** l'interprétation est appliquée aux signaux vidéo de lignes choisies.

3. Dispositif selon la revendication 1 ou 2, **caractérisé en ce que** des tableaux de correspondance de la transformation locale entre le plan de l'image et le plan de la chaussée sont utilisés pour la prévision et **en ce que** la décision de la présence ou non d'un objet (14, 15) en mouvement dans la zone correspondante de l'espace est prise au moyen de la différence entre la valeur de gris prévue et la valeur de gris réellement observée dans l'image suivante.

4. Procédé pour surveiller l'angle mort sur des véhicules avec au moins une caméra vidéo, laquelle enregistre la situation de trafic dans l'angle mort, et avec au moins un dispositif d'interprétation qui, à partir des signaux vidéo générés par l'au moins une caméra vidéo, dérive un signal d'alerte en cas de détection d'un objet externe et le délivre sur un dispositif de signalisation, une extraction ligne par ligne des contenus d'image à partir des signaux vidéo étant effectuée dans une partie analogique du dispositif d'interprétation et les contenus d'image extraits qui ne représentent par des objets qui se déplacent étant exclus de la formation du signal d'alerte dans une partie numérique du dispositif d'interprétation, par comparaison avec un signal acheminé qui caractérise le mouvement propre du véhicule, **caractérisé en ce que** les signaux vidéo sont à chaque fois différenciés et intégrés, **en ce que** les signaux vidéo différenciés sont comparés avec une valeur de seuil prédéfinie et **en ce que** l'intégration est interrompue lorsque le signal vidéo différencié correspondant dépasse la valeur de seuil prédéfinie, et **en ce que** le signal vidéo intégré est acheminé à la partie numérique
ou
**en ce que** les valeurs de gris moyennes qui sont détectées dans une image sont utilisées, au moyen des mouvements propres connus du véhicule, pour prévoir les valeurs de gris correspondantes dans l'image chronologiquement suivante.

5. Procédé selon la revendication 4, **caractérisé en ce que** l'interprétation est appliquée aux signaux vidéo de lignes choisies.

6. Procédé selon la revendication 4 ou 5, **caractérisé en ce que** des tableaux de correspondance de la transformation locale entre le plan de l'image et le plan de la chaussée sont utilisés pour la prévision et **en ce que** la décision de la présence ou non d'un objet en mouvement dans la zone correspondante de l'espace est prise au moyen de la différence entre la valeur de gris prévue et la valeur de gris réellement observée dans l'image suivante.
